# EUROPÄISCHE PATENTANMELDUNG

(11) **EP 1 471 356 A1**
(43) Veröffentlichungstag der Anmeldung: **27.10.2004**
(21) Anmeldenummer: 04405175.3
(22) Anmeldetag: 23.03.2004
(51) Int. Cl.: G01P 3/68, D03D 47/34, B65H 61/00

(54) **Messeinrichtung für Bewegungen an einer Webmaschine**

(30) Priorität: 22.04.2003 EP 03405277
(71) Anmelder: Sultex AG, 8630 Rüti (CH)
(72) Erfinder: Siegl, Walter, 8712 Stäfa (CH); Markward, Dietmar, 8630 Rüti (CH); Christe, Marcel, 8630 Rüti (CH)
(74) Vertreter: Sulzer Management AG

(57) **Zusammenfassung**

Mit der Messeinrichtung werden Bewegungen an einer Webmaschine (1) bestimmt. Mit dieser Messeinrichtung (2) sind durch Lagebestimmung einer oder mehrerer identifizierbaren Stellen (31), die sich auf einer bewegten Oberfläche (30) und innerhalb eines zweidimensionalen Messfensters (3) der Messeinrichtung befinden, digitale Signale zu diskreten, in einer periodischen Abfolge auftretenden Zeitpunkten erzeugbar. Die Signale sind zur Bestimmung eines Abstands, der sich den Lageänderungen der identifizierbaren Stellen zuordnen lässt, auswertbar. Optische und elektronische Komponenten (21, 22, 23, 20) zu einer Mustererkennung sind in der Messeinrichtung integriert. Durch die Mustererkennung lassen sich die identifizierbaren Stellen definieren. Die Lagen mindestens eines Teils dieser Stellen werden zu zwei aufeinander folgenden Zeitpunkten der genannten Abfolge bestimmt. Der den Lageänderungen zugeordnete Abstand wird zu jedem der diskreten Zeitpunkte berechnet. Somit kann der von der bewegten Oberfläche zurückgelegte Weg (L) sowie deren Geschwindigkeit (v, V) zu diesen Zeitpunkten bestimmt werden.

## Beschreibung

Die Erfindung betrifft eine Messeinrichtung für Bewegungen an einer Webmaschine gemäss Oberbegriff von Anspruch 1. Sie bezieht sich auch auf Verfahren zum Betreiben der Messeinrichtung.

An Webmaschinen werden Geschwindigkeiten von Garnen häufig mit Einrichtungen gemessen, in denen jeweils das Garn einer Dreipunktumlenkung unterworfen wird. Dabei können sich im Garn strukturelle Veränderungen ergeben, die eine Verminderung der Gewebequalität bedeuten. Es sind daher berührungslose Messverfahren entwickelt worden, die keine Beeinträchtigung der Gewebequalität zur Folge haben. Beispielsweise wird die Geschwindigkeit von Kettfäden mit zwei Sensoren ermittelt, die in Laufrichtung der Fäden hintereinander angeordnet sind und die charakteristische Strukturmerkmale der Fäden registrieren. Die Sensoren erzeugen den Strukturmerkmalen entsprechende Signale, aus denen mittels einem Korrelationsverfahren die Fadengeschwindigkeit elektronisch berechnet wird. Die charakteristischen Strukturmerkmale sind beispielsweise elektrische Ladungen, die auf Fäden natürlich vorkommen und dort regellos verteilt sind (vgl. EP-A- 1 033 579). Es können auch variable Einfärbungen als solche Merkmale verwendet werden. Auch der Dopplereffekt ist für die berührungslose Geschwindigkeitserfassung angewendet worden. Bei der Anwendung von Korrelationsverfahren oder des Dopplereffekts sind elektronische Einrichtungen erforderlich, die relativ aufwändig und daher mit hohen Kosten verbunden sind.

Aufgabe der Erfindung ist es, eine weitere Messeinrichtung zu schaffen, mit der Bewegungen an einer Webmaschine überwacht, insbesondere Geschwindigkeiten von Fäden bestimmt werden können, und die ein kostengünstiges Messverfahren ermöglicht. Die Aufgabe soll bereits gelöst sein, wenn die relativ langsame Bewegung von Kettfäden messbar ist. Diese Aufgabe wird durch die im Anspruch 1 definierte Messeinrichtung gelöst.

Mit der Messeinrichtung werden Bewegungen an einer Webmaschine bestimmt. Mit dieser Messeinrichtung sind durch Lagebestimmung einer oder mehrerer identifizierbaren Stellen, die sich auf einer bewegten Oberfläche und innerhalb eines zweidimensionalen Messfensters der Messeinrichtung befinden, digitale Signale zu diskreten, in einer periodischen Abfolge auftretenden Zeitpunkten erzeugbar. Die Signale sind zur Bestimmung eines Abstands, der sich den Lageänderungen der identifizierbaren Stellen zuordnen lässt, auswertbar. Optische und elektronische Komponenten zu einer Mustererkennung sind in der Messeinrichtung integriert. Durch die Mustererkennung lassen sich die identifizierbaren Stellen definieren. Die Lagen mindestens eines Teils dieser Stellen werden zu zwei aufeinander folgenden Zeitpunkten der genannten Abfolge bestimmt. Der den Lageänderungen zugeordnete Abstand wird zu jedem der diskreten Zeitpunkte berechnet. Somit kann der von der bewegten Oberfläche zurückgelegte Weg sowie deren Geschwindigkeit zu diesen Zeitpunkten bestimmt werden.

Die abhängigen Ansprüche 2 bis 5 betreffen vorteilhafte Ausführungsformen der erfindungsgemässen Messeinrichtung. Verfahren zum Betreiben dieser Messeinrichtung sind jeweils Gegenstand der Ansprüche 6 bis 10.

Nachfolgend wird die Erfindung anhand der Zeichnungen erläutert. Es zeigen:
- Fig. 1: eine Webmaschine mit einer erfindungsgemässen Messeinrichtung,
- Fig. 2: einen Messkopf der erfindungsgemässen Messeinrichtung in schematischer Darstellung,
- Fig. 3, 4: schematische Diagramme von Messsignalen und
- Fig. 5: ein Blockdiagramm zu einem erfindungsgemässen Verfahren.

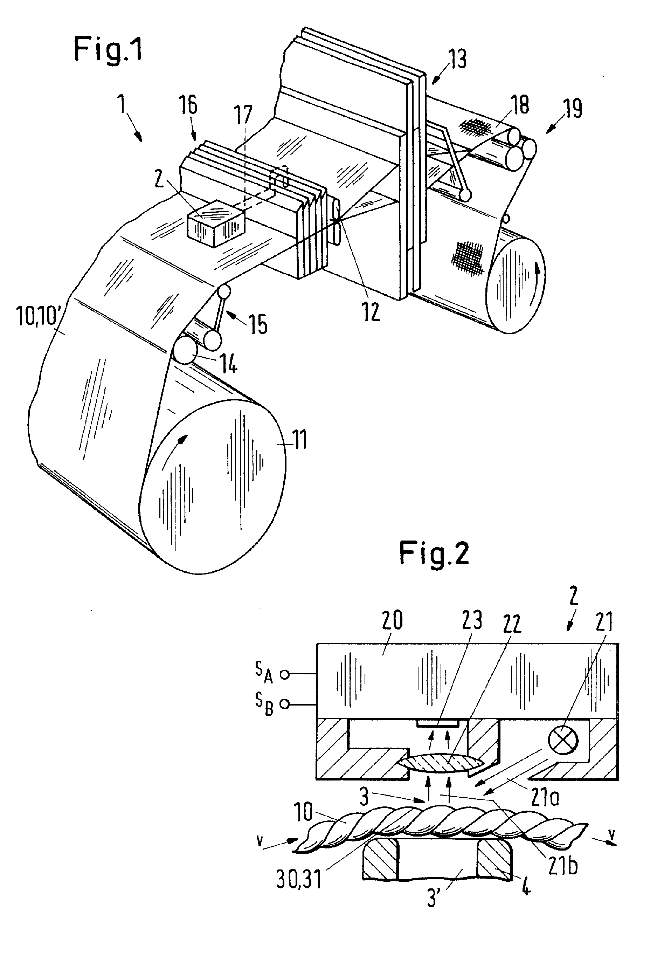

Die Webmaschine 1 der Fig. 1 trägt eine erfindungsgemässe Messeinrichtung 2 mit einem Messkopf zum berührungslosen Erfassen einer Fadengeschwindigkeit v, mit der Kettfäden 10 einer Kette 10' von einem Kettbaum 11 abgezogen werden. Weitere Komponenten der Webmaschine 1 sind: eine Traverse 12, Webschäfte 13, ein Umlenkbaum 14, ein Webkettenspanner 15 und Kettfadenwächter 16. Das Bezugszeichen 18 betrifft das erzeugte Gewebe oberhalb eines Warenabzugs 19. Mit einer Befestigung 17, die zwischen den Kettfadenwächtern 16 hindurch eine Verbindung zur Traverse 12 herstellt, wird der Messkopf der Messeinrichtung 2 an einer raumfesten Position festgehalten. Der Messkopf kann dabei lose in einen nicht dargestellten Halter der Befestigung 17 eingelegt sein. Zur Bestimmung der Kettfadengeschwindigkeit v kann der Messkopf der Messeinrichtung 2 über oder unterhalb der Kette 10' angeordnet sein. Im Beispiel der Fig.1 befindet sie sich über der Kette 10' zwischen dem Kettbaum 11 und den Kettfadenwächtern 16. Dort bewegen sich die Fäden 10 weitgehend in einer gemeinsamen Ebene.

Der Messkopf der Messeinrichtung 2 ist schematisch - teilweise als Schnitt - in Fig. 2 gezeigt. In der kompakt ausgebildeten Messeinrichtung 2 sind optische und elektronische Komponenten integriert. Eine Lichtquelle 21 wirft durch eine nicht dargestellte Optik einen Lichtstrahl 21a auf zu beobachtende Stellen 31, nämlich auf eine bewegte Oberfläche 30 innerhalb eines "Messfensters 3", das einen zweidimensionalen Ausschnitt der Oberfläche 30 bildet. Im Messfenster 3 gestreutes Licht 21b wird durch eine Linse 22 auf einen Bildsensor 23 projiziert, in welchem ein Abbild der beleuchteten Oberfläche 30 erzeugt wird. Das Abbild wird mit einer elektronischen Schaltung 20 bearbeitet und zu einem Resultat in Form von Ausgangssignalen S_{A} und S_{B} umgesetzt.

Voraussetzung für das Messverfahren ist, dass die Oberfläche 30 eine Strukturierung aufweist, durch die sich ein filigranes Schattenmuster ergibt, in dem Flächenelemente unterschiedlicher Graustufen unterscheidbar sind.

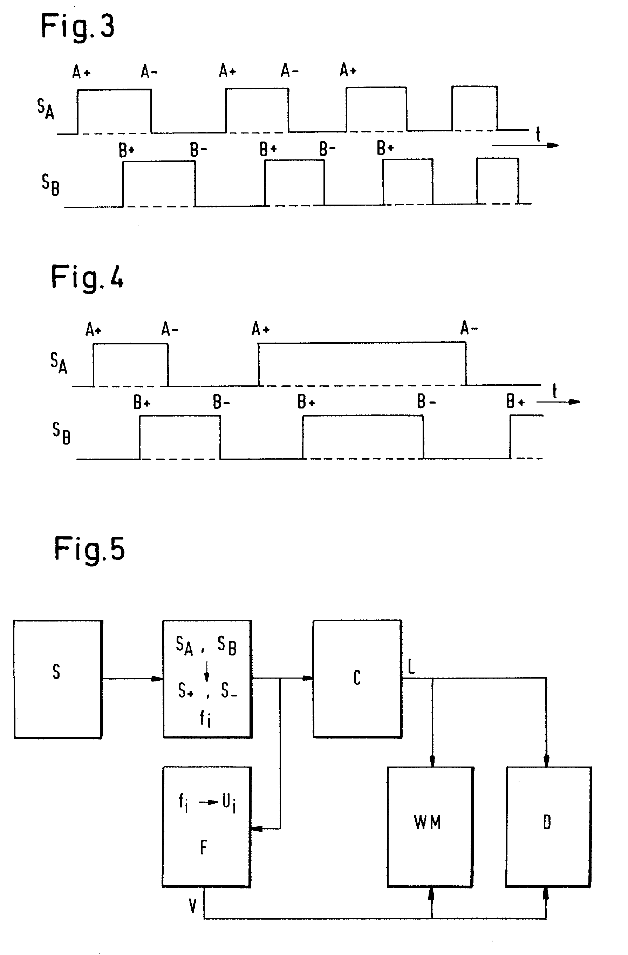

Anhand des Schattenmusters lassen sich identifizierbare Stellen 31 definieren. Eine Bewegung der Oberfläche 30 durch das Messfenster 3 kann durch Lagebestimmungen einer oder mehrerer identifizierbaren Stellen 31 beobachtet werden. Es werden mittels dem Bildsensor 23 und der elektronischen Schaltung 20 digitale Signale zu diskreten, in einer periodischen Abfolge auftretenden Zeitpunkten hergestellt. Diese Abfolge von Zeitpunkten lässt sich mit einer blinkenden Lichtquelle 21, beispielsweise mit einer Licht emittierenden Diode LED, erzeugen. Blinkt die LED 1500 Mal in der Sekunde, so beträgt die Dauer zwischen aufeinanderfolgenden Zeitpunkten der periodischen Abfolge 2/3 ms. Aus den digitalen Signalen wird ein Abstand bestimmt, der den Lageänderungen der identifizierbaren Stellen zugeordnet ist. Am Ausgang der elektronischen Schaltung 20 lassen sich die Signale S_{A}, S_{B} abgreifen, die angenähert Rechteckkurven sind, wie sie in den Figuren 3 und 4 dargestellt sind.

Die Messeinrichtung 2 enthält optische und elektronische Komponenten zu einer Mustererkennung. Durch die Mustererkennung werden identifizierbare Stellen 31 definiert. Es werden die Lagen mindestens eines Teils dieser Stellen 31 bestimmt. Der Weg, den die Stellen 31 zwischen zwei aufeinander folgenden Zeitpunkten der genannten Abfolge zurücklegen, ist ein zur Geschwindigkeit v proportionaler Abstand. Zu jedem der diskreten Zeitpunkte wird der den Lageänderungen zugeordnete Abstand berechnet. Dieser Abstand dividiert durch die Zeitdauer zwischen zwei der aufeinanderfolgenden Zeitpunkten (z. B. 2/3 ms) ergibt die zu messende Geschwindigkeit v.

Mit Vorteil werden die Kettfäden 10 im Messbereich mit einem Element 4 in Berührung gebracht, durch das ein transversales Schwingen der Kettfäden 10 weitgehend unterdrückt wird. So lassen sich die Fäden 10 berührungslos bezüglich der Messeinrichtung 2 vor deren Linse 22 vorbei führen. Das Element 4 weist im Bereich des Messfensters 3 eine Öffnung 3' auf, damit keine Störsignale aufgrund einer reflektierenden Unterlage erzeugt werden. Die Schwingungen der Kettfäden 10 lassen sich von unten - wie in Fig. 2 gezeigt - aber auch von oben (nicht dargestellt) unterdrücken.

Die Messeinrichtung 2 kann an einer anderen Stelle der Kette 10' als unmittelbar neben den Kettfadenwächter 16 angeordnet sein. Es kann auch beispielsweise durch eine entsprechende Positionierung im Bereich des Warenabzugs 19 die Abzugsgeschwindigkeit des erzeugten Gewebes 18 gemessen werden. Oder die Messeinrichtung 2 kann am Kettbaum 11 angeordnet werden, um dessen Drehgeschwindigkeit zu bestimmen.

Für die erfindungsgemässe Messeinrichtung 2 bestehen weitere Möglichkeiten der Anwendung. So ist insbesondere ein Anwendung bei Frottier-Webmaschinen vorteilhaft, bei welcher jeweils separate Messköpfe für eine Grundkette und/oder eine Florkette vorgesehen werden können.

Ferner lässt sich an einer Webmaschine 1, bei der die Kette von mindestens zwei Teilkettbäumen abgezogen wird, jedem Teilkettbaum ein Messkopf zuordnen. Mit den Messköpfen werden die Kettfadengeschwindigkeiten v der Teilketten 10' gemessen. Der Kettfadenabzug kann so - unter dem Einsatz einer Regelungseinheit (nicht dargestellt) - synchronisiert werden, indem die Kettfadengeschwindigkeiten v einander angeglichen werden.

Als Bildsensor 23 wird aus Kostengründen mit Vorteil ein Baustein mit integriertem Photosensor und Image Prozessor verwendet, der als Massenprodukt in optischen Computermäusen eingesetzt wird. Dieses elektronische Eingabegerät umfasst einen Image Sensor mit einer kleinen Pixelzahl (Matrix mit 16 x 16 Pixel; jeweils 64 Graustufen), eine Optik und einen sehr schnellen DSP (Digital Signal Prozessor). Eine zu messende Geschwindigkeit entspricht der Geschwindigkeit, mit der eine Computermaus mit der Hand geführt wird und die im Maximum ungefähr 35 cm/s beträgt. Dieser Maximalwert reicht aus, um die Geschwindigkeit v der Kettfäden 10 zu messen. Auch lässt sich eine Fadenbeschleunigung messen, die bis zu 2 m/s² beträgt.

Es kann die Geschwindigkeit v eines Fadens 10 bestimmt werden oder auch mehrerer Fäden, wenn diese gleichzeitig im Messfenster 3 des Sensors 23 erfasst werden. Das Messfenster 3 ist quadratisch und hat eine Seitenlänge von 1 - 1,3 mm. Der Faden 10, der eine Oberflächenstrukturierung aufweisen muss (was für ein Stapelgarn aber nicht immer für ein Monofil zutrifft), ist durch die Messeinrichtung 2 erfassbar, wenn er eine bestimmte Mindestdicke von vorzugsweise 0,01 mm hat.

Der genannte Image Prozessor stellt am Ausgang "Quadratursignale" in Form zweier Paare XA, XB und YA, YB zur Verfügung, wobei diese Signalpaare den beiden Bewegungsrichtungen längs einer x- bzw. y-Achse entsprechen. In der erfindungsgemässen Messeinrichtung 2 wird nur eines der beiden Signalpaare benötigt, das hier mit S_{A}, S_{B} bezeichnet wird. Beide Signale lassen sich als Diagramme darstellen, die als eine zeitliche Abfolge von ansteigenden Flanken A+ bzw. B+ und absteigenden Flanken A- bzw. B-beschreibbar sind. Jede Flanke entspricht einem Zählerpunkt (+1 oder -1), der einer Verschiebung des im Bildsensor 23 registrierten Schattenmusters um einen vorgegeben Abstand (z. B. 0,1 mm) zugeordnet ist. Je dichter die Flanken der Signale S_{A} und S_{B} auf der Zeitachse t aufeinander folgen, desto grösser ist die beobachtete Geschwindigkeit v. In den Diagrammen der Fig. 3 ist beispielhaft eine Zunahme der Geschwindigkeit v dargestellt. Erfolgt die Bewegung immer in der gleichen Richtung, so ergibt sich eine zeitliche Abfolge der Flanken nach folgendem Muster: ... A+ / B+ / A- / B- / A+ / B+ / A-/ B- / A+ / B+... Dies ist beim Beispiel der Fig. 3 der Fall. Die Flanken der beiden Signale S_{A} und S_{B} treten regelmässig versetzt zu einander auf. Bei den Diagrammen der Fig. 4 liegt eine Abfolge ... A+ / B+ / A- / B- / A+ / B+ / B-/ A- / A+ / B+ ... vor. Hier ist die regelmässige Versetzung im Bereich B+ / B- / A- unterbrochen. Im Intervall, das in diesem Bereich zwischen den beiden Flanken B+ und B- liegt, hat die Geschwindigkeit v die Richtung gewechselt.

Bei der Bewegung der Kettfäden finden regelmässig Richtungswechsel der Geschwindigkeit v statt. Da nur eine mittlere Geschwindigkeit V in Vorwärtsrichtung für die Regelung der Webmaschine benötigt wird, werden die Signale S_{A} und S_{B} in eine Folge von Signalen S₊ = +1 und S₋ = -1 für jeweils einen Schritt in Vorwärts- bzw. Rückwärtsrichtung umgewandelt. Durch Addition der Signale S₊ und S- ergibt sich eine Zahl, die proportional zu dem in Vorwärtsrichtung zurückgelegten Weg ist. Aus den Signalen S₊ und S-lässt sich auch jeweils eine Frequenz fₛ (s = + oder -) bestimmen, die proportional zur mittleren Geschwindigkeit V ist.

Die erfindungsgemässe Messeinrichtung ermöglicht ein Verfahren, bei dem eine Rückwärtsbewegung durch Filterung und zeitsynchrones Abtasten mit dem Webmaschinenzyklus fehlerfrei kompensiert werden kann.

In Fig. 5 ist ein Blockbild gezeigt, anhand dem die Übermittlung und die Umwandlung der Signale dargestellt ist. Aus dem optischen Wegsensor S (Bildsensor 23 der Messeinrichtung 2) werden die Quadratursignale S_{A} und S_{B} zu einem Wandler übermittelt, in dem die Signale S₊ und S- sowie Signale für die Frequenzen fₛ erzeugt werden. Aus den Frequenzen fₛ, die in Spannungen Uₛ umgewandelt werden, und unter Verwendung eines Filters F (1 Hz-Filter) wird die mittlere Geschwindigkeit V bestimmt. (Insbesondere mitteln sich dabei durch die Rückwärtsbewegungen erzeugte Beiträge weg. Diese Beiträge werden durch entsprechende Beiträge der Vorwärtsbewegungen kompensiert.) In einem Zähler C wird aus den Signalen S₊ und S- der in Vorwärtsrichtung zurückgelegten Weg L bestimmt. Die beiden Grössen L und V werden einerseits auf einem Display D angezeigt und andererseits für die Regelung der Webmaschine WM verwendet.

## Patentansprüche

1. Messeinrichtung für Bewegungen an einer Webmaschine (1), mit welcher Messeinrichtung (2) durch Lagebestimmung einer oder mehrerer identifizierbaren Stellen (31), die sich auf einer bewegten Oberfläche (30) und innerhalb eines zweidimensionalen Messfensters (3) der Messeinrichtung befinden, digitale Signale zu diskreten, in einer periodischen Abfolge auftretenden Zeitpunkten erzeugbar sind, wobei diese Signale zur Bestimmung eines Abstands, der sich den Lageänderungen der identifizierbaren Stellen zuordnen lässt, auswertbar sind,
**dadurch gekennzeichnet, dass** optische und elektronische Komponenten (21, 22, 23, 20) zu einer Mustererkennung in der Messeinrichtung integriert sind, dass durch die Mustererkennung die identifizierbaren Stellen definierbar sind, dass die Lagen mindestens eines Teils dieser Stellen zu zwei aufeinander folgenden Zeitpunkten der genannten Abfolge bestimmbar sind, dass der den Lageänderungen zugeordnete Abstand zu jedem der diskreten Zeitpunkte berechenbar ist und somit der von der bewegten Oberfläche zurückgelegte Weg (L) sowie deren Geschwindigkeit (v, V) zu diesen Zeitpunkten bestimmbar ist.

2. Messeinrichtung nach Anspruch 1, **dadurch gekennzeichnet, dass** sie zur Bestimmung einer Kettfadengeschwindigkeit (v) an der Webmaschine über oder unterhalb einer Kette (10') sowie zwischen Kettbaum (11) und Kettfadenwächtern (16) angeordnet ist und dass im Messbereich die Kettfäden (10) mit einem Element (4) in Berührung stehen, durch das ein transversales Schwingen der Kettfäden unterdrückbar ist

3. Messeinrichtung nach Anspruch 1, **dadurch gekennzeichnet, dass** ein Messkopf der Messeinrichtung (2) im Bereich eines Warenabzugs (19) angeordnet ist, wo die Abzugsgeschwindigkeit des erzeugten Gewebes (18) bestimmbar ist.

4. Messeinrichtung nach Anspruch 1, **dadurch gekennzeichnet, dass** ein Messkopf der Messeinrichtung (2) am Rand des Kettbaums (11) angeordnet ist, wo die Drehgeschwindigkeit des Kettbaums bestimmbar ist.

5. Messeinrichtung nach Anspruch 1 oder 2, **dadurch gekennzeichnet, dass** an der Webmaschine (1) die Kette (10') von mindestens zwei Teilkettbäumen abziehbar ist, dass die Messeinrichtung (2) eine Mehrzahl von Messköpfen umfasst, dass jedem Teilkettbaum einer der Messköpfe zugeordnet ist, nämlich zur Messung der den Teilkettbäumen entsprechenden Kettfadengeschwindigkeiten, und dass eine Regelungseinheit Teil der Webmaschine ist, durch die der Kettfadenabzug durch Angleichen der Kettfadengeschwindigkeiten synchronisierbar ist.

6. Verfahren zum Betreiben der Messeinrichtung (2) gemäss einem der Ansprüche 1 bis 5, **dadurch gekennzeichnet, dass** mittels eines Bildsensors (23) eine Mustererkennung zur Identifzierung von Stellen (31) auf einer bewegten Oberfläche (30) durchgeführt wird, dass für eine periodische Abfolge von diskreten Zeitpunkten die Lagen mindestens eines Teils dieser Stellen zu zwei aufeinander folgenden Zeitpunkten bestimmt werden und dass ein den Lageänderungen zugeordneter Abstand zu jedem der diskreten Zeitpunkte berechnet wird.

7. Verfahren nach Anspruch 6, **dadurch gekennzeichnet, dass** ein Image Prozessor verwendet wird, der den Lageänderungen entsprechende Quadratursignale (S_{A}, S_{B}) erzeugt und **dass** aus den Quadratursignalen mittels elektronischer Berechnung ein von der bewegten Oberfläche zurückgelegter Weg (L) sowie deren Geschwindigkeit (v) zu den diskreten Zeitpunkten ermittelt wird.

8. Verfahren nach Anspruch 7, **dadurch gekennzeichnet, dass** der von Kettfäden in Vorwärtsrichtung zurückgelegte Weg (L) sowie eine mittlere Geschwindigkeit (V) der Kettfäden ermittelt wird.

9. Verfahren nach Anspruch 8, **dadurch gekennzeichnet, dass** bei der Bestimmung der mittleren Geschwindigkeit (V) ein Filter (F), isnbesondere ein 1 Hz-Filter verwendet wird.

10. Verfahren nach einem der Ansprüche 6 bis 9, **dadurch gekennzeichnet, dass** eine Rückwärtsbewegung durch Filterung und zeitsynchrones Abtasten mit dem Webmaschinenzyklus fehlerfrei kompensiert wird.
